# EUROPÄISCHE PATENTANMELDUNG

(11) **EP 0 707 248 A1**
(43) Veröffentlichungstag der Anmeldung: **17.04.1996**
(21) Anmeldenummer: 94116315.6
(22) Anmeldetag: 14.10.1994
(51) Int. Cl.: G05B 19/042

(54) **Verfahren zur Aktivierung bzw. Deaktivierung von Teilprogrammen mittels über Programmattribute gesteuerten Sichten in einem bevorzugt auf Zustandsgraphen basierenden Automatisierungssystem**

(71) Anmelder: SIEMENS AKTIENGESELLSCHAFT, D-80333 München (DE)
(72) Erfinder: Middel, Jörg, D-91085 Weisendorf (DE); Rath, Günter, D-91085 Weisendorf (DE); Ritscher, Christian, D-90587 Obermichelbach (DE); Schneider, Roland, D-91052 Erlangen (DE); Wissman, Dieter, Dr., D-91090 Effeltrich (DE)

(57) **Zusammenfassung**

Für eine Programmerstellung stehen ausgewählte Typen von graphischen Objekten ("Zustand", "Aktion", "Transition", "Steuerbedingung") und ausgewählte Typen von Programmattributen ("Basis", "Fehler", "Automatik", "Hand", "Sichtbar") zur Verfügung. Bei der Erstellung eines Gesamtprogramms werden eine Vielzahl von graphischen Objekten anwendungsabhängig miteinander in Wechselbeziehungen gebracht und jedem graphischen Objekt des Gesamtprogramms wird erfindungsgemäß ein anwendungsabhängig ausgewähltes Programmattribut zugeordnet. Aus dem Gesamtprogramm werden anwendungsabhängig diejenigen graphischen Objekte, welche bestimmte Programmattribute aufweisen, zu Teilprogramme repräsentierenden, aktivier- bzw. deaktivierbaren "Sichten" zusammengefaßt.

## Beschreibung

Bei Automatisierungssystemen wird zunehmend das Verhalten eines technischen Systems bzw. eines Teiles davon mit Hilfe von graphischen Objekten einer graphischen Programmier-, Steuer- und Bedienoberfläche beschrieben und gesteuert. Diese werden z.B. als "Zustandsgraphen" bezeichnet und im Rahmen der nachfolgenden Beschreibung mit dem Begriff "Graph" abgekürzt. Ein solcher Graph hat den Vorteil, daß das stationäre und dynamische Verhalten eines technischen Systems, z.B. einer technischen Produktionsanlage, vollständig in Form einer übersichtlichen, geometrischen Darstellung visualisiert ist. Hiermit wird insbesondere die Projektierung, Programmierung, Kompilierung, Änderung, Dokumentation und der Ablauf von z.B. in der Praxis u.U. äußerst komplexen Steuerungen und Regelungen von technischen Prozessen erheblich erleichtert.

Für die anwendungsabhängige Zusammenstellung eines Graphen stehen ausgewählte Typen graphischer Objekte zur Verfügung, die quasi als Bausteine dienen. Dies soll desweiteren am Beispiel von sogenannten Zustandsgraphen erläutert werden, bei denen die graphischen Objekte mit den Begriffen "Zustand", "Aktion", "Transition" und "Schaltbedingung" bezeichnet werden können. Ein Objekt vom Typ "Zustand" in einem Graphen repräsentiert dabei einen möglichen statischen Betriebszustand des dazugehörigen technischen Systems, z.B. einer technischen Produktionsanlage bzw. einem System zur Datenübertragung. Kann das technische System unterschiedliche Betriebszustände einnehmen, was in aller Regel der Fall ist, so ist für jeden dieser potentiellen Betriebszustände im Graph ein eigenes "Zustand" Objekt vorhanden. Diese bilden quasi die "Fixpunkte" eines das technische Gesamtsystem beschreibenden gesamten Graphen.

Das dynamische Verhalten eines technischen Systems, d.h. die Verbindungen zwischen den als statische Fixpunkte ansehbaren "Zustand" Objekten, wird durch eine anwendungsabhängige Zusammenstellung von Objekten der Typen "Aktion", "Transition" und "Schaltbedingung" beschrieben. Dabei wird jeder "Zustand" durch eine "Aktion" aufrechterhalten. Im Graphen eines technisches Gesamtsystems ist somit einem jeden "Zustand" Objekt mindestens eine, diesen Anlagenzustand aufrechterhaltendes Objekt vom Typ "Aktion" zugeordnet. Übergange zwischen Zustanden, d.h. Ähderungen des Betriebszustandes von Betriebsmitteln der technischen Anlage, werden durch Objekte vom Typ "Transitionen" beschrieben. Zeichentechnisch werden diese in einem Graphen dargestellt durch eine pfeilartige Verbindung zwischen einem "Zustand" Objekt, welches den Startzustand der Anlage beschreibt, und einem "Zustand" Objekt, welches den Zielzustand der Anlage beschreibt. Jeder "Transition" ist schließlich ein Objekt vom Typ "Schaltbedingung" zugeordnet. Diese enthalt eine technische Ursache, bei deren Auftreten die dazugehörige "Transition", d.h. der entsprechende Zustandsubergang, aktiviert wird. Diese "Schaltbedingungen" werden bei technischen Anlagen durch Meßgeber, Sensoren oder Eingabegerate bereitgestellt. Sensoren signalisieren dabei automatisch die an speziellen Stellen der Anlage aktuell vorliegenden, gegebenenfalls umschaltrelevanten Prozeßbedingungen, während über Eingabegeräte vom Bedienpersonal der Anlage Schaltbedingungen vorgegebenen werden können.

Technische Graphen der oben beschriebenen Art werden mit Datenverarbeitungsgeräten erstellt, bearbeitet und visualisiert. Als "Erstellsysteme" können hierfür bevorzugt Computersysteme eingesetzt werden, welche eine graphische Bedienoberfläche aufweisen. Für derartige Systeme eignen sich besonders sogenannte Engineering-Stations, herkömmliche PCs oder auch speicherprogrammierbare Steuerungen. Aus einem er-stellten, d.h. editierten, Graphen wird anschließend ein Steuerungsprogramm abgeleitet, welches auf einem sogenannten "Ablaufsystem" ausgeführt wird. Diese sind in der Regel Automatisierungssysteme, insbesondere Prozeßrechner, speicherprogrammierbare Steuerungen bzw. PCs, die zur Steuerung eines technischen Systems bzw. Prozesses dienen. Auch die programmtechnische Umsetzung, d.h. Kompilierung, eines Graphen in ein ablauffähiges Steuerungsprogramm z.B. für ein als Ablaufsystem dienendes Automatisierungssystem für eine technische Anlage kann vom Erstellsystem vorgenommen werden.

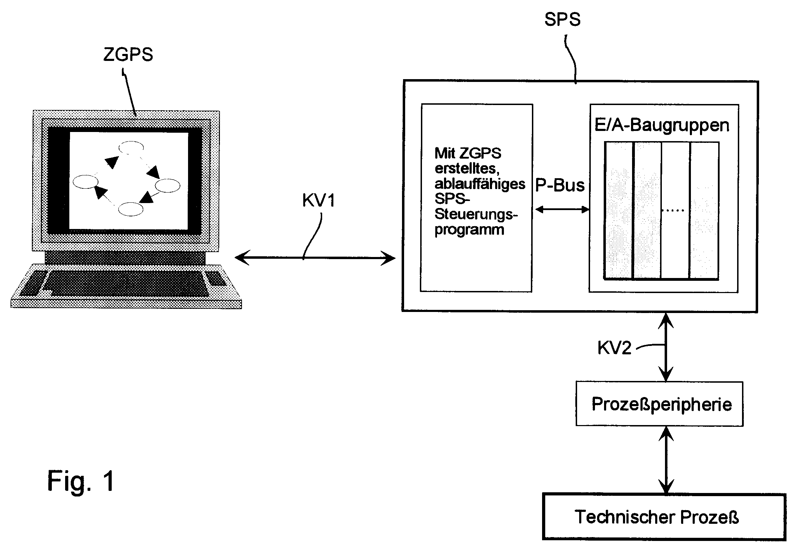

In Figur 1 ist eine derartige Anordnung symbolisch dargestellt. Als "Erstellsystem" ZGPS dient bevorzugt eine Engineering-Station, welche eine interaktive, graphische Erstellung eines Programms z.B. für eine als Ablaufsystem dienende Speicherprogrammierbare Steuerung SPS mit Hilfe von Zustandsgraphen ermöglicht. Die darin erstellte "Source" eines Zustandsgraphenprogramms wird bevorzugt im Erstellsystem ZGPS selbst zu einem auf dem Automatisierungssystem SPS ablauffähigen Steuerungsprogramm kompiliert. Das Programm wird über eine Kommunikationsverbindung KV1 vom Erstellsystem ZGPS zum Automatisierungssystem SPS übertragen. Als Automatisierungssysteme können z.B. die Steuerungen Sinumerik 840D oder Simatic S7 AS 300 der Firma SIEMENS eingesetzt werden.

Im Automatisierungssystem wird vom Steuerungsprogramm über einen internen P-Bus, eine Vielzahl von Ein- und Ausgabebaugruppen (E/A-Baugruppen) und eine weitere Kommunikationsschnittstelle KV2 auf die Prozeßperipherie zugegriffen. Hierbei handelt es sich um verteilt angebrachte Sensoren, Aktoren und Funktionseinheiten, welche die Funktion von analogen und binären Meßgebern und Stellgliedern aufweisen. Über diese Prozeßschnittstelle wird der technische Prozeß durch das im Erstellsystem ZGPS anwendungsabhängig editierte Zustandsgraphen- Steuerungsprogramm beeinflußt. Das Programm erfaßt die aktuellen Zustande von Meßgebern und Sensoren wie z.B. Lichtschranken, Bewegungsmeldern, Füllstandsanzeigen, Temperatursensoren und vielem mehr, und steuert abhängig davon Funktionseinheiten in der Fertigung und Stoffbearbeitung wie z.B. Motoren, Drehmaschinen, Fräsmaschinen, Fertigungsbänder, Hochregallager, Behälterfüllvorrichtungen, Temperaturregelungen, Mischer, Dosiersysteme und vieles mehr.

Trotz der in keiner Weise klassisch zeilen-/ tabellenartigen, sondern anschaulich flächigen, d.h. quasi zeichnerisch konstruktiven Darstellbarkeit der Strukturen eines Steuerungsprogrammes mit Hilfe der aus den Objekten zusammengesetzten Graphen, besteht doch auch bei diesen das Problem, daß deren Übersichtlichkeit besonders bei komplexen Steuerungsaufgaben an umfangreichen technischen Anlagen eingeschränkt ist. Durch die Vielzahl der dann vorhandenen Objekte und "Verästelungen" ist es nur schwer möglich, Teilfunktionen eines Zustandsgraph Steuerungsprogrammes bildende Teilprogramme zu erkennen. Derartige Teilfunktionen können z.B. der Normal-, Fehler-, Automatik- oder Handbetrieb einer dazugehörigen technischen Anlage sein. Jeder Teilfunktion wird durch ausgewählte Objekte, d.h. "Zustande" mit "Aktionen" und/oder "Transitionen" mit "Schaltbedingungen", realisiert. Eine jede Gruppe solcher Objekte bildet dann ein Teilprogramm.

Der Erfindung liegt die Aufgabe zu Grunde, eine anwendungsabhängige Aktivierung bzw. Deaktivierung von Teilprogrammen bei mittels graphischer Objekte beschriebenen technischen Systemen, insbesondere bei auf Zustandsgraphen basierenden Sternerungs- und Regelungsvorrichtungen, zu ermöglichen.

Die Aufgabe wird gelöst mit dem im Anspruch 1 angegebenen Verfahren. Vorteilhafte weitere Ausführungsformen derselben sind in den nachfolgenden Unteransprüchen angegeben.

Die Erfindung beruht auf dem Prinzip, daß die Aktivierung bzw. Deaktivierung von Teilprogrammen mit Hilfe von über Programmattributen gesteuerten "Sichten" ermöglicht wird. Voraussetzung hierfür ist, daß bei der Erstellung eines Gesamt-Programms, wobei eine Vielzahl von graphischen Objekten anwendungsabhängig miteinander in Wechselbeziehungen gebracht werden, ebenfalls jedem graphischen Objekt des Gesamtprogramms ein anwendungsabhängig ausgewähltes Programmattribut zugeordnet wird. Hiermit ist es nun möglich, für die Ausführung des Gesamtprogramms, insbesondere auf einem Automatisierungssystem, diejenigen graphischen Objekte, welche Programmattribute aufweisen, die in einer anwendungsabhängig aktuell ausgewählten Gruppe bestimmter Programmattribute enthalten sind, zu einer dazugehörigen sogenannten "Sicht" zusammenzufassen. Eine "Sicht" wird somit definiert durch eine anwendungsabhängige Auswahl von einem oder mehreren bzw. keinem Programmattribut. Eine derartige "Sicht" repräsentiert somit wegen der Zusammenfassung von anwendungsabhängig ausgewählten Objekten des Gesamtprogramms ein Teilprogramm desselben, was aktiviert bzw. deaktiviert werden kann.

Die Erfindung hat somit den Vorteil, daß über derartige "Sichten" Teilgraphen von Zustandsgraphen definiert werden, welche wiederum Teilprogrammen eines Gesamtprogramms entsprechen. Als eine mögliche "Sicht" kann theoretisch jeder zulässige Teilgraph dienen. Ist z.B. im einem "Erstellsystem" für Graphen eine bestimmte "Sicht" aktiviert, so kann nur der zu dieser Sicht gehörende Teilgraph bearbeitet werden. Es werden nur die zu diesem Teilgraph gehörenden Objekte angezeigt, d.h. Zustände mit Aktionen und/oder Transitionen mit Schaltbedingungen. Nur diese graphischen Objekte können modifiziert werden. Dies hat den Vorteil, daß wegen der Deaktivierung aktuell nicht benötigter Teilprogramme die zum aktivierten Teilprogramm gehörigen graphischen Objekte übersichtlich vorliegen, und eine Bearbeitung derselben somit schnell und fehlerfrei möglich ist.

Ist z.B. im einem "Ablaufsystem" für Graphen eine bestimmte "Sicht" aktiviert, so kann nur der zu dieser "Sicht" gehörende Teilgraph ausgeführt werden. Hier dient eine "Sicht" dazu, ein Teilprogramm eines Gesamtprogramms zu definieren. Da der gesamte Graph ein Steuerprogramm insbesondere für eine speicherprogrammierbare Steuerung repräsentiert, stellen die zu dem durch eine "Sicht" freigelegten Teilgraph gehörenden graphischen Objekte ein Teilprogramm für die Steuerung dar. Dies hat den Vorteil, daß mit Hilfe der Sichten auf einfache Weise vorübergehend aktuelle Teilprogramme eines Gesamtprogramms aktiviert bzw. deaktiviert werden können. Das erfindungsgemäße Konzept der über Programmattribute gesteuerten Sichten ist vorteilhaft für alle graphische Programmiersprachen im Anwendungsbereich der Automatisierungstechnik einsetzbar.

Die Erfindung hat den Vorteil, daß aktuell relevante Aspekte eines Gesamtprogramms in Form von Teilprogrammen herausgefiltert und diese Teilprogramme dann aktiviert bzw. deaktiviert werden können. Diese Teilgraphen können z.B. auch für die Darstellung auf einem Monitor, für das Drucken von Dokumentationen, für die editierende Bearbeitung eines Graphen- Sternerungsprogrammes z.B. durch Hinzufügen, Ändern oder Löschen von Objekten u.v.m. herangezogen werden. Vorteilhaft wird aus den in einem Gesamtprogramm anwendungsabhängig miteinander in Wechselbeziehungen gebrachten graphischen Objekten automatisch ein insbesondere auf einem Automatisierungssystem ablauffähiger Programmcode generiert. Der Graph bildet dann die einzige und vollständige Basis für eine Programmgenerierung, ohne das weitere Zwischenschritte notwendig sind.

Die Erfindung und vorteilhafte Ausführungsformen derselben werden anhand der in den nachfolgend kurz erläuterten Figuren dargestellten Beispielen näher erläutert. Dabei zeigt
- Fig.1:: das bereits erläuterte Blockschaltbild für eine Anordnung aus einem "Erstellsystem" für auf Zustandsgraphen basierende Steuerungsprogramme und einem als "Ablaufsystem" dienenden Automatisierungssystem,
- Fig.2:: einen beispielhaften, gemäß der Erfindung mit Programmattributen versehenen einfachen Zustandsgraphen zur Automatisierung eines Motors,
- Fig.3a bis 3d:: die "Zustand" Objekte des Zustandsgraphen von Fig.2 mit den dazugehörigen, den jeweiligen "Zustand" aufrechterhaltenden "Aktion" Objekten,
- Fig.4a bis 4f:: die "Transition" Objekte des Zustandsgraphen von Fig.2 mit den dazugehörigen, die jeweilige "Transition" verursachenden "Schaltbedingung" Objekten,
- Fig.5:: eine durch entsprechende Zuweisung und Aktivierung von Programmattributen gebildete erste "Sicht" des Zustandsgraphen von Fig.2, welche z.B. zur "Kundendokumentation" einsetzbar ist,
- Fig.6:: eine durch entsprechende Zuweisung und Aktivierung von Programmattributen gebildete weitere "Sicht" des Zustandsgraphen von Fig.2, wodurch z.B. der "Normal" Betriebszustand des Motors gesteuert wird,
- Fig.7:: eine durch entsprechende Zuweisung und Aktivierung von Programmattributen gebildete weitere "Sicht" des Zustandsgraphen von Fig.2, wodurch z.B. der "Fehler" Betriebszustand des Motors gesteuert wird,
- Fig.8:: einen weiteren beispielhaften, gemäß der Erfindung die zusätzliche Programmattributen "Hand" und "Automatik" aufweisenden Zustandsgraphen zur Automatisierung eines motorgetriebenen Förderbandes, und
- Fig.9:: eine durch entsprechende Zuweisung und Aktivierung von Programmattributen gebildete erste "Sicht" des Zustandsgraphen von Fig.8, wodurch z.B. der "Fehler" Betriebszustand des Bandes gesteuert wird, und
- Fig.10:: eine durch entsprechende Zuweisung und Aktivierung von Programmattributen gebildete weitere "Sicht" des Zustandsgraphen von Fig.8, wodurch z.B. der "Hand" Betriebszustand des Bandes gesteuert wird, und
Im folgenden wird zunächst an Hand eines ersten, zum Zwecke der Erläuterung stark vereinfachten Beispiels in den Figuren 2 bis 7 das Prinzip der Erfindung erläutert.

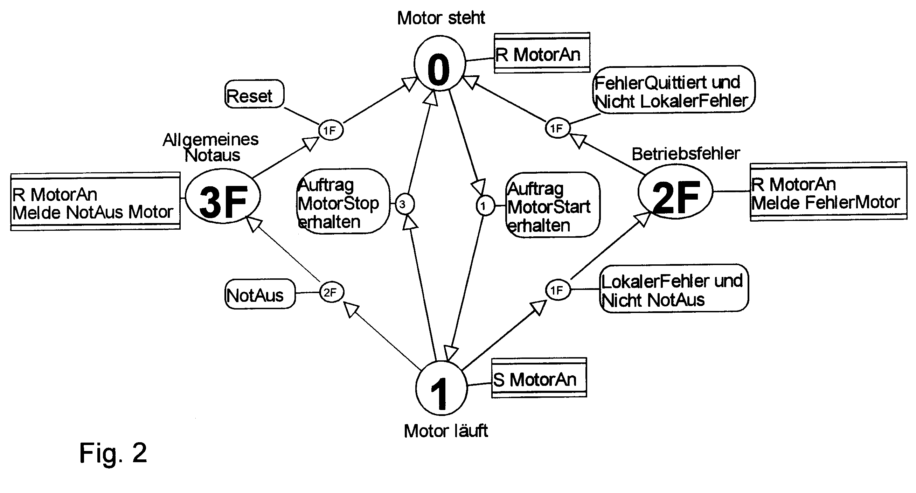

Figur 2 zeigt das typische Erscheinungsbild eines Zustandsgraphen, womit beispielhaft ein Motor automatisiert wird. Der Graph beschreibt vollständig alle stationären Zustände und das dynamische Verhalten des Motors. Bei Vorliegen eines entsprechend leistungsfähigen Systems kann der Zustandsgraph mit allen Objekten gegebenenfalls zugleich als Ablaufprogramm für eine den Motor beeinflussende speicherprogrammierbare Steuerung dienen. Andernfalls kann auf einfache Weise der Zustandsgraph in ein Ablaufprogramm für eine speicherprogrammierbare Steuerung umgesetzt werden. Üblicherweise müssen bei der Automatisierung eines Antriebs verschiedene Betriebszustände, insbesondere in Form von Betriebsarten des dazugehörigen Motors und Fehlerfällen, berücksichtigt werden.

In der Praxis gibt es verschiedene Personen, die sich mit dem z.B. einen kleinen Teil einer technischen Anlage darstellenden Motor unter unterschiedlichen und zeitlich wechselnden Randbedingungen auseinandersetzen müssen. Dies sind z.B. der Automatisierungsingenieur während der Projektierungsphase, der Inbetriebsetzungsfachmann, der Wartungsfachmann und der sogenannte Werker der technischen Anlage, d.h. der Benutzer des automatisierten Motors. Nicht für jede Personengruppe sind alle Objekte im Gesamtgraphen von Fig.2 relevant. Um nun für die jeweilige Person relevante Teilprogramme aus diesem Graph separieren zu können, werden den vorhandenen graphischen Objekten erfindungsgemäß Programmattribute zugeordnet.

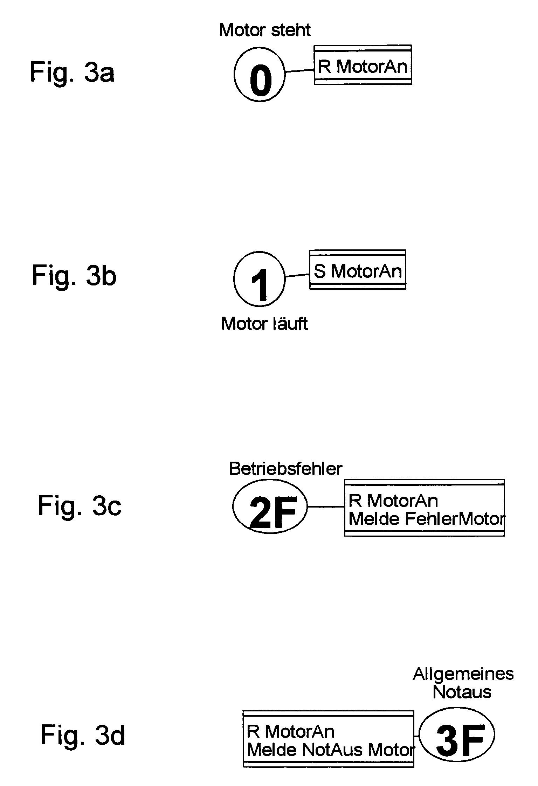

Der in Fig.2 dargestellte Graph besteht aus Objekten, welche im Falle des vorliegenden Zustandsgraphen dem Typ "Zustand", "Aktion", "Transition" und "Schaltbedingung" entsprechen. Hierzu sind in den Fig. 3a bis 3d die "Zustand" Objekte des Graphen von Fig.2 mit den dazugehörigen, den jeweiligen "Zustand" aufrechterhaltenden "Aktion" Objekten zusammengestellt. Ferner sind den "Zustand" Objekten zum besseren Verständnis Titel zugeordnet. So zeigt Fig.3a den ersten, mit "Motor steht" betitelten Zustand 0, zu dessen Aufrechterhaltung die "Aktion" RMotorAn, d.h. Rücksetze Motor an, ausgeführt werden muß. Fig. 3b zeigt den komplementären zweiten, mit "Motor läuft" betitelten Zustand 1, zu dessen Aufrechterhaltung die "Aktion" SMotorAn, d.h. Setze Motor an, ausgeführt werden muß. Fig. 3c zeigt eine dritten, mit "Betriebsfehler" betitelten Zustand 2F, zu dessen Aufrechterhaltung die "Aktionen" RMotorAn+MeldeFehlerMotor, d.h. Rücksetze Motor an und melde Motorfehler, ausgeführt werden müssen. Fig. 3d zeigt schließlich einen vierten, mit "Allgemeines Notaus" betitelten Zustand 3F, zu dessen Aufrechterhaltung die "Aktionen" RMotorAn+MeldeNotAusMotor,d.h. Rücksetze Motor an und melde Motornotabschaltung, ausgeführt werden müssen.

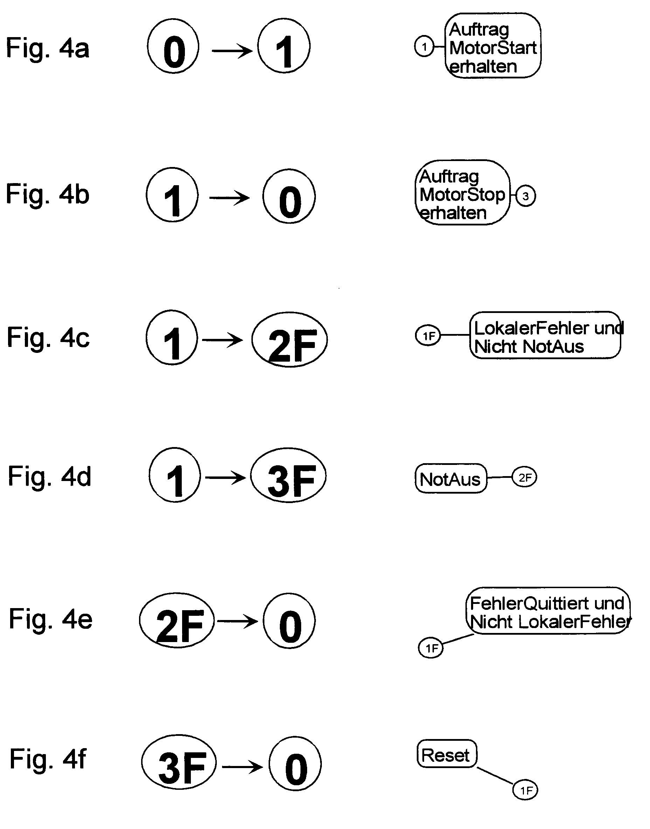

Ferner sind in den Figuren 4a bis 4f die "Transition" Objekte des Zustandsgraphen von Fig.2 mit den dazugehörigen, die jeweilige "Transition" verursachenden "Schaltbedingung" Objekten herausgestellt. So zeigt Fig. 4a als erste Transition den Übergang von Zustand 0 nach Zustand 1. Dieser wird ausgelöst, wenn die Schaltbedingung "AuftragMotorStarterhalten" vorliegt. Fig. 4b zeigt als weitere Transition den Übergang von Zustand 1 nach Zustand 0. Dieser wird ausgelöst, wenn die Schaltbedingung "AuftragMotorStarterhalten" vorliegt. Fig.4c zeigt die Transition von Zustand 1 nach Zustand 2F. Dieser wird ausgelöst, wenn die Schaltbedingung "Lokaler Fehler und NichtNotAus" vorliegt. Fig. 4d zeigt die Transition von Zustand 1 nach Zustand 3F. Dieser wird ausgelöst, wenn die Schaltbedingung "NotAus" vorliegt. Fig. 4e zeigt die Transition von Zustand 2F nach Zustand 0. Dieser wird ausgelöst, wenn die Schaltbedingung "Fehler quittiert und NichtLokaler Fehler" vorliegt. Fig. 4f zeigt schließlich die Transition von Zustand 3F nach Zustand 0. Dieser wird ausgelöst, wenn die Schaltbedingung "Reset" vorliegt.

Die Durchnummerierung der von einem Objekt vom Typ "Zustand" ausgehenden Objekte vom Typ "Transition" mit 0,1,2,3,... hat die Funktion einer Priorität. Hiermit sind den im Gesamtprogramm der Fig.2 anwendungsabhängig miteinander in Wechselbeziehungen stehenden graphischen Objekten eines Typs, insbesondere des Typs "Schaltbedingung", im Rahmen der Ausführung des dazugehörigen Gesamtprogramms eine zeitliche Bearbeitungsreihenfolge zugeordnet.

Erfindungsgemäß wird nun jedem Objekt des Graphen von Fig.2, d.h. jedem "Zustand" und jeder "Transition", "Aktion" und "Schaltbedingung" ein sogenanntes "Programmattribut" zugeordnet. Im Beispiel der Figuren 2 bis 7 sind für "Zustände" und "Transitionen" die Programmattribute "Basis" und "Fehler" vorgesehen. So sind den Zuständen 0,1 und den Transitionen 0 nach 1 (1) und von 1 nach 0 (3), die keine weiteren Kennungen aufweisen, das Programmattribut "Basis" zugeordnet. Ferner sind den Zuständen 2F,3F und den Transitionen 1 nach 2F (1F), 1 nach 3F (2F), 3F nach 0 (1F) und 2F nach 0 (1F), erkennbar an der zusätzlichen Kennung F, das Programmattribut "Fehler" zugeordnet. Für Objekte der Typen "Aktion" und "Schaltbedingungen" ist das weitere Programmattribut "Sichtbar" vorgesehen. Es ergibt sich somit die folgende Tabelle:

| Objekt : | Programmattribut : |
|---|---|
| Zustand 0 : | Basis |
| Zustand 1 : | Basis |
| Zustand 2 : | Fehler |
| Zustand 3 : | Fehler |
| Aktionen zu allen Zuständen : | Sichtbar |
| Transition von 0 nach 1 : | Basis |
| Transition von 1 nach 0 : | Basis |
| Transition von 1 nach 2 : | Fehler |
| Transition von 1 nach 3 : | Fehler |
| Transition von 3 nach 0 : | Fehler |
| Transition von 2 nach 0 : | Fehler |
| Schaltbedingungen aller Transitionen: | Sichtbar |

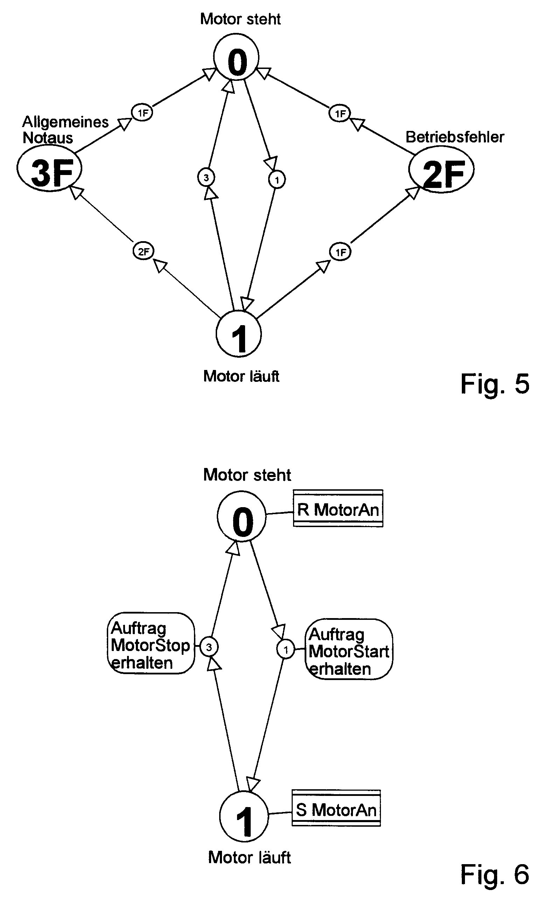

Erfindungsgemäß wird eine "Sicht" aktiviert durch die anwendungsabhängige Auswahl von keinem, einem oder mehreren Programmattributen. In den Figuren 5,6,7 sind beispielhaft die "Sichten" von drei Teilprogrammen dargestellt.

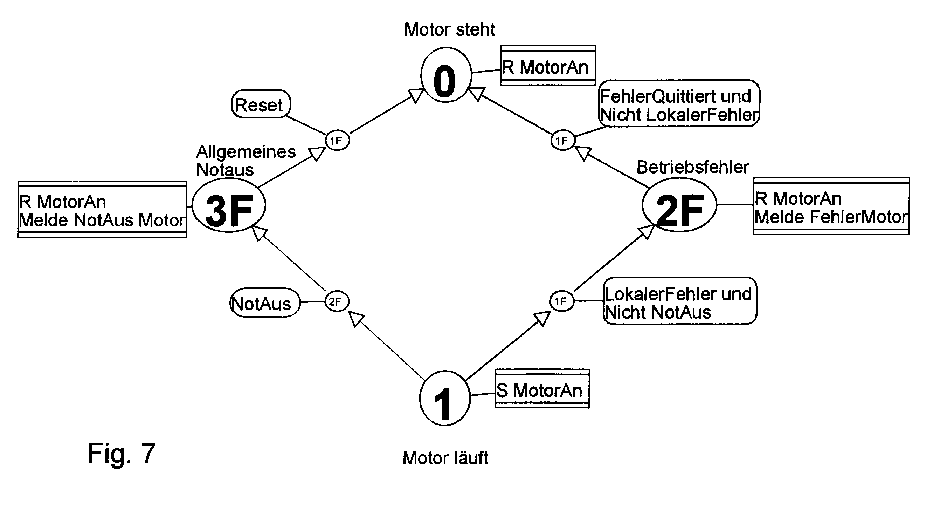

Die in Fig. 5 dargestellte "Sicht2" zeigt einen Teilgraphen, bei dem interne Details der Motorsteuerung deaktiviert sind, d.h. die Objekte vom Typ "Aktion" und "Schaltbedingung", und der im wesentlichen das äußere Verhalten des Motors beschreibt. Eine derartige Sicht ist somit als ein z.B. zur Kundendokumentation bzw. zu Vorführungszwecken dienendes Teilprogramm ausführbar. Die Fig. 6 "Sicht3" zeigt den Teilgraphen, in dem die das Verhalten des Motors im Normalbetrieb bestimmenden Objekte aktiviert sind, d.h. alle Objekte ohne das Programmattribut "Fehler". Es bildet somit ein mit "Normal" betitelbares, ohne weiteres in der Praxis auch ohne die in Fig.2 zusätzlich vorhandenen Objekte separat ausführbares Teilprogramm. Die Fig. 7 "Sicht4" zeigt schließlich den Teilgraphen, in dem die das Verhalten des Motors im Fehlerfalle bestimmenden Objekte aktiviert sind, d.h. alle Objekte ohne das Programmattribut "Basis". Es bildet somit ein mit "Fehler" betitelbares Teilprogramm. Auch dieses ist z.B. zu Testzwecken gegebenenfalls ohne die in Fig.2 zusätzlich vorhandenen Objekte separat ausführbar. Da die Fig. 2 den Gesamtgraphen der Motorsteuerung zeigt, der das statische und dynamische Verhalten des Motors vollständig beschreibt, kann dieser auch als eine mit "Alles" betitelbare "Sicht1" angesehen werden. Dieses "Teilprogramm", bei dem alle bei der beispielhaften Motorsteuerung vorhandenen Objekte aktiviert sind, ist selbstverständlich von einer speicherprogrammierbaren Steuerung separat ausführbar.

Die Sichten in den Figuren 2,5,6,7 können wie folgt zusammengefaßt werden ::
- Fig.2 :: Sicht1 =
Σ Objekte mit Programmattributen (Basis, Fehler, Sichtbar)
- Fig.5 :: Sicht2 =
Σ Objekte mit Programmattributen (Basis, Fehler)
- Fig.6 :: Sicht3 =
Σ Objekte mit Programmattributen (Basis, Sichtbar)
- Fig.7 :: Sicht4 =
Σ Objekte mit Programmattributen (Fehler, Sichtbar) zuzüglich aller Zustand Objekte, die an ein derartiges Objekt grenzen, z.B. die Zustände 0, 1.

Grundsätzlich kann jeder Teilgraph bzw. das dazugehörige Teilprogramm eine mögliche "Sicht" bilden. Die Menge möglicher "Sichten" ist somit in keiner Weise auf die in den Figuren 2, 5 bis 7 dargestellten Beispiele beschränkt. Bevorzugt für den Einsatz in der Automatisierung von technischen Systemen und Prozessen können allgemein die folgenden Objekte eines Zustandsgraphen vorteilhaft zu einer "Sicht" zusammengefaßt werden:
a) Menge aller Objekte vom Typ "Zustand", deren Programmattribute zur aktuell ausgewählten Menge von Programmattributen der Sicht gehören, z.B. alle "Zustände" mit den Programmattributen "Normal" und/oder "Fehler",
b) zusätzlich die Menge aller Objekte vom Typ "Transition", deren Programmattribute zur aktuell ausgewählten Menge von Programmattributen der Sicht gehören, z.B. alle "Transitionen" mit den Programmattributen "Normal" und/oder "Fehler",
c) zusätzlich die Menge aller Objekte vom Typ "Zustand", die Startknoten oder Endknoten von "Transitionen" darstellen, welche zu der unter b) definierten Auswahl von "Transitionen" gehören, und
d) Für den Fall, daß zusätzlich das Programmattribut "Sichtbar" verfügbar ist: Alle "Aktionen" und "Schaltbedingungen", die Objekten vom Typ "Zustand" und "Transition" zugeordnet sind, welche zu einer unter a), b) oder c) definierten Auswahl von Objekten gehören.

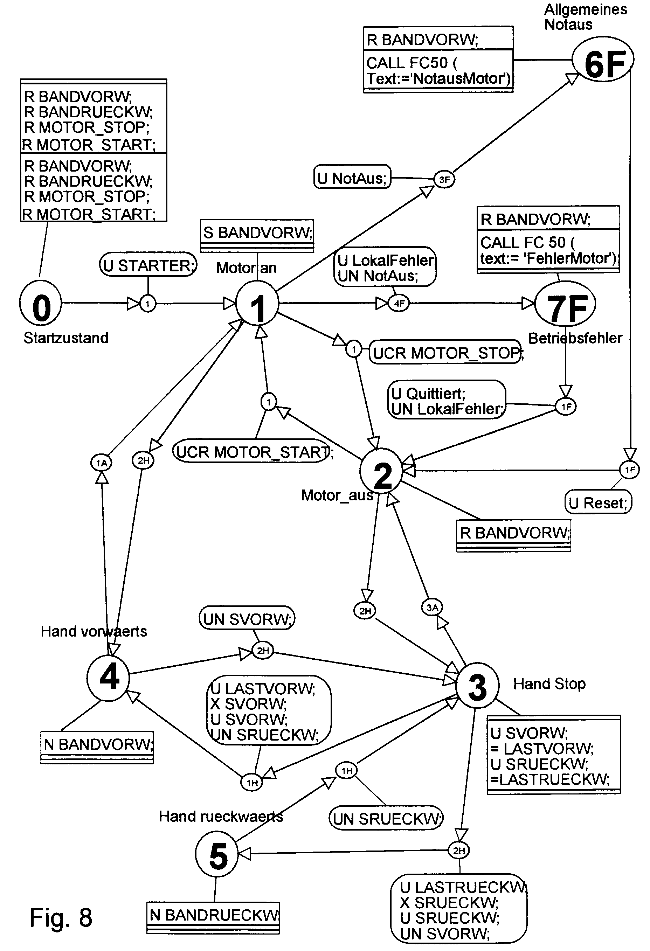

In Fig. 8 ist beispielhaft ein zur Automatisierung eines Förderbandes gehöriger komplexer Graph dargestellt. Dabei sind den "Zustand" Objekten 0,1,2,3,4,5 wiederum das Programmattribut "Basis", und den "Zustand" Objekten 6F,7F das Programmattribut "Fehler" zugeordnet. Entsprechend verfügen "Transition" Objekte ohne zusätzliche Kennung über das Programmattribut "Basis", und mit F markierte "Transition" Objekte, z.B. 1F,3F,4F über das Programmattribut "Fehler". Darüber hinausgehend sind für "Transition" Objekte die weiteren Programmattribute "Hand" und "Automatik" vorgesehen. Dies ist in Fig. 8 an zusätzlichen Kennungen H und A erkennbar. So sind drei "Transition" Objekten 1 das Programmattribut "Basis", zwei "Transition" Objekten 1A,3A das Programmattribut "Automatik", mehreren "Transition" Objekten 1H, 2H das Programmattribut "Hand" und mehreren "Transition" Objekten 1F,3F,4F das Programmattribut "Fehler" zugeordnet.

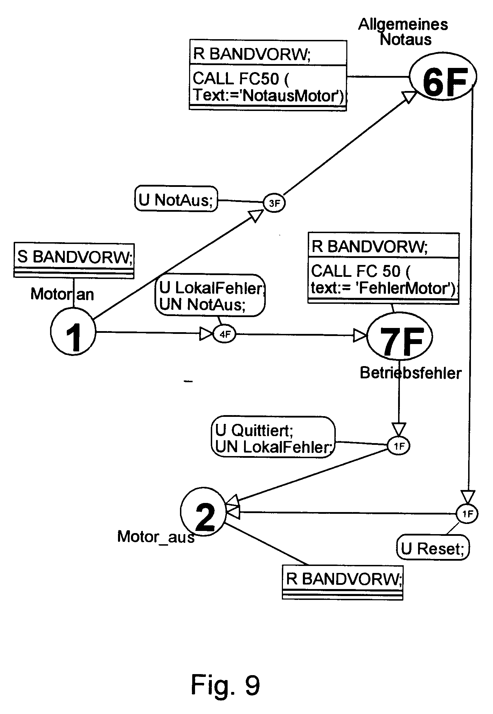

Fig. 9 zeigt beispielhaft eine "Sicht", bei der alle mit dem Programmattribut "Fehler" versehene Objekte vom Typ "Zustand" und "Transition" aktiviert sind. Zusätzlich sind die "Zustand" Objekte 1,2 aktiviert, da diese einen Start- bzw. Endknoten für mit dem Programmattribut "Fehler" versehene Objekte vom Typ "Transition" bilden. Ferner sind alle Objekte vom Typ "Aktion" und "Schaltbedingung", welchen den oben genannten, aktivierten Objekten vom Typ "Zustand" und "Transition" zugeordnet sind, ebenfalls aktiviert.

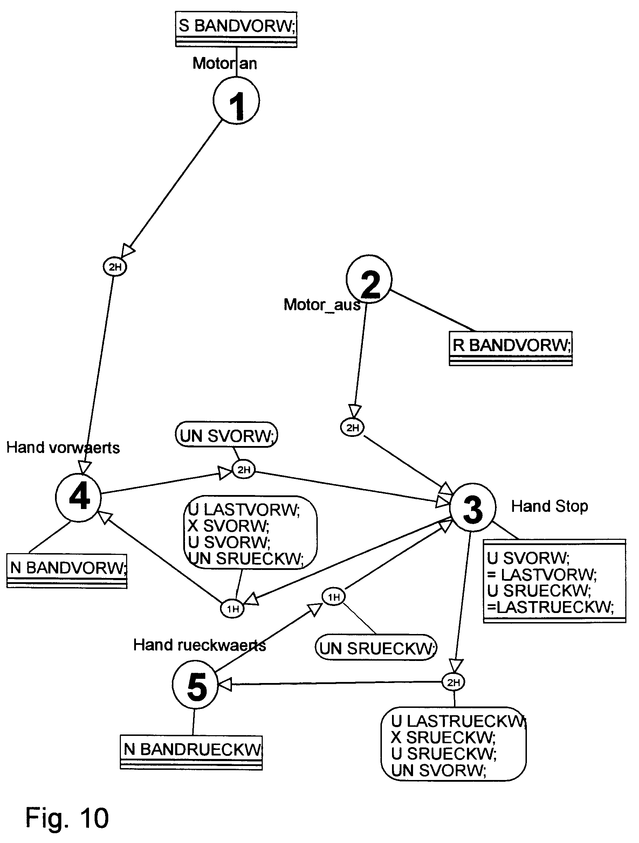

Fig. 10 zeigt schließlich beispielhaft eine "Sicht", bei der alle mit dem Programmattribut "Hand" versehene Objekte vom Typ "Transition" aktiviert sind. Zusätzlich sind die "Zustand" Objekte 1,2,3,4,5 aktiviert, da diese einen Start- bzw. Endknoten für mit dem Programmattribut "Hand" versehene Objekte vom Typ "Transition" bilden. Ferner sind alle Objekte vom Typ "Aktion" und "Schaltbedingung", welchen den oben genannten, aktivierten Objekten vom Typ "Transition" und "Zustand" zugeordnet sind, ebenfalls aktiviert.

## Patentansprüche

1. Verfahren zur Aktivierung bzw. Deaktivierung von Teilprogrammen aus einem Gesamtprogramm, welches insbesondere in der Automatisierungstechnik zur Steuerungen und/oder Regelung von technischen Prozessen dient, wobei
a) für eine Programmerstellung ausgewählte Typen von graphischen Objekten ("Zustand", "Aktion", "Transition", "Steuerbedingung") zur Verfügung stehen,
b) für eine Programmerstellung ausgewählte Typen von Programmattributen ("Basis", "Fehler", "Automatik", "Hand", "Sichtbar") zur Verfügung stehen,
c) bei der Erstellung eines Gesamtprogramms eine Vielzahl von graphischen Objekten anwendungsabhängig miteinander in Wechselbeziehungen gebracht werden,
d) bei der Erstellung eines Gesamtprogramms jedem graphischen Objekt des Gesamtprogramms ein anwendungsabhängig ausgewähltes Programmattribut zugeordnet wird, und wobei
e) aus dem Gesamtprogramm anwendungsabhängig diejenigen graphischen Objekte, welche bestimmte Programmattribute aufweisen, zu Teilprogramme repräsentierenden, aktivier- bzw. deaktivierbaren Sichten zusammengefaßt werden.

2. Verfahren nach Anspruch 1, wobei die für eine Programmerstellung zur Verfügung stehenden Typen von graphischen Objekten ("Zustand", "Aktion", "Transition", "Steuerbedingung") Elemente eines auf Zustandsgraphen basierenden Programmiersystems sind.

3. Verfahren nach Anspruch 1 oder 2, wobei den in einem Gesamtprogramm anwendungsabhängig miteinander in Wechselbeziehungen gebrachten graphischen Objekten vom Typ "Transition" Prioritäten (0,1,2,3,...) zum Zwecke der Festlegung einer zeitlichen Reihenfolge bei der Ausführung des dazugehörigen Gesamtprogramms zugeordnet sind.

4. Verfahren nach einem der vorangegangenen Ansprüche, wobei aus den in einem Gesamtprogramm anwendungsabhängig miteinander in Wechselbeziehungen gebrachten graphischen Objekten automatisch ein insbesondere auf einem Automatisierungssystem ablauffähiger Programmcode generiert wird.
